# FASCICULE DE BREVET EUROPEEN

(11) **EP 3 996 990 B1**
(45) Date de publication et mention de la délivrance du brevet: **03.09.2025**
(21) Numéro de dépôt: 20750342.6
(22) Date de dépôt: 09.07.2020
(51) Int. Cl.: B64C 11/26, B29D 99/00, B64C 27/473, B64C 11/06, F01D 5/28, F01D 5/30

(54) **AUBE DE SOUFFLANTE**
PROPELLERBLATT
PROPELLER BLADE

(30) Priorité: 11.07.2019 FR 1907809
(43) Date de publication de la demande: 18.05.2022
(73) Titulaire: SAFRAN AIRCRAFT ENGINES, 75015 Paris (FR)
(72) Inventeur: POSTEC, Clément Pierre, 77550 Moissy-Cramayel (FR); COURTIER, Vivien Mickaël, 77550 Moissy-Cramayel (FR); JOUDON, Vincent, 77550 Moissy-Cramayel (FR)
(74) Mandataire: Regimbeau
(86) Numéro de dépôt international: PCT/FR2020/051236
(87) Numéro de publication internationale: WO 2021/005312

(56) Documents cités:
- EP-A1- 1 908 919
- EP-A1- 3 406 424
- WO-A1-2016/174345
- CA-A1- 2 784 740
- FR-A1- 2 732 406
- US-A1- 2014 112 796
- US-A1- 2014 161 620

## Description

### DOMAINE DE L'INVENTION

La présente invention concerne le domaine des aubes et en particulier le domaine des aubes destinées aux turbomachines notamment de type aéronautique.

### ETAT DE LA TECHNIQUE

Une turbomachine comprend classiquement un compresseur, une chambre de combustion et une turbine constituant un générateur de gaz permettant de générer de la puissance. Le rôle du compresseur est d'accroître la pression de l'air fournie à la chambre de combustion. Le rôle de la turbine est d'assurer l'entrainement en rotation du compresseur en prélevant une partie de l'énergie de pression des gaz chauds sortant de la chambre de combustion et en la transformant en énergie mécanique.

Une turbomachine peut être du type « à double flux » c'est-à-dire qu'elle est traversée par deux flux d'air, un flux primaire et un flux secondaire. Le flux primaire est produit par des éléments constitutifs d'une turbomachine simple flux auxquels une ou plusieurs turbines supplémentaires sont ajoutées afin d'entraîner un aubage de compression, la soufflante. Celle-ci est équipée d'aubes de grande dimension, les aubes de soufflante produisant le flux secondaire. La soufflante augmente faiblement la pression des gaz la traversant, mais comme son diamètre est grand, l'énergie produite pour la poussée est élevée. Une grille de redressement de flux est positionnée derrière la soufflante pour redresser le flux d'air provenant de la soufflante.

La tendance actuelle concernant les moteurs d'aéronefs civils vise à réduire la consommation spécifique, la pollution sonore et les émissions d'oxydes d'azote (Nox). Une des solutions techniques adoptée par les motoristes, consiste à augmenter le taux de dilution entre le flux primaire et le flux secondaire. A ce titre, plusieurs architectures comme les moteurs UHBR (Ultra High Bypass Ratio) et les moteurs à doublets d'hélices non carénées (CROR : Counter Rotating Open-Rotor ou USF : Unducted Single Fan) sont envisagés en remplacement potentiel des turbomachines actuelles pour les vols moyens courriers.

Plus particulièrement, les architectures USF sont constituées d'un générateur de traction : une hélice assimilée à une soufflante suivie d'une grille de redresseurs non carénés, et d'un générateur de puissance qui permet d'entrainer le générateur de traction.

Par ailleurs, il est connu d'utiliser des aubes de turbomachine en matériau composite à base de fibres de renfort imprégnées par une matrice organique.

Ces aubes en matériau composite sont appréciées pour leur légèreté par rapport aux aubes métalliques et pour leur résistance. De plus, ces aubes sont habituellement réalisées à partir de fibres de verre, de carbone, de Kevlar, etc. associées à une matrice de résine thermodurcissable à haute résistance. De tels matériaux présentent une bonne résistance dans le sens des fibres mais certaines configurations desdites fibres peuvent présenter des inconvénients tels que des limitations de la résistance mécanique se traduisant par exemple par des limites de résistance pour éviter un délaminage. En conséquence, certaines configurations sont adaptées à un type particulier de famille de turbomachine et difficile à adapter à d'autres types de turbomachine, par exemple suivant le degré de poussée souhaité ou plus généralement de performance de la turbomachine. Il en est de même pour la rigidité lorsqu'on utilise des fibres à haut module d'élasticité tel le carbone. Les fibres sont disposées en faisceaux et/ou en nappes de tissus superposées disposées en coquilles ou drapées autour d'un noyau.

Les nappes de tissus superposées autorisent une bonne résistance dans le plan des nappes de tissus, surtout dans les directions des fils de trame et de chaîne les composant. On appelle délaminage la décohésion du matériau composite entre les nappes de tissus, par exemple sous l'effet d'un choc important qui serait provoqué par une ingestion d'un gros oiseau.

Par ailleurs, et afin d'améliorer la résistance de l'aube aux impacts de corps étrangers, les nappes de tissus sont habituellement disposées sans coupures le long de la surface de l'aube ; l'arrivée de l'extrémité d'une nappe de tissus à la surface de l'aube pourrait se traduire par une faiblesse au délaminage à cet endroit. Cette technologie peut être difficile à mettre au point dans le cas des aubes de soufflante des turbomoteurs pour aéronefs, surtout lorsqu'il s'agit d'aubes dites à "large corde", c'est à dire ayant une grande distance entre le bord d'attaque et le bord de fuite. De telles aubes peuvent atteindre une hauteur de 1200 mm et une distance entre le bord d'attaque et le bord de fuite de 500 mm tout en restant minces et légères. Elles sont de plus particulièrement exposées aux impacts de corps étrangers, tels les oiseaux, qui sont ingérés par le turbomoteur. Parmi les différentes sollicitations subies par ces aubes, deux exigent des solutions techniques contradictoires :
1) l'aube vibre suivant différents modes propres notamment en flexion et en torsion. Pour combattre cela, il faut augmenter la rigidité de l'aube et disposer dans la masse de l'aube de fortes densités de fibres en matériau à haut module d'élasticité.
2) l'aube peut être soumise aux impacts de corps étrangers qui peuvent provoquer la rupture de la matrice entre les nappes de tissus entraînant la décohésion de ces nappes l'une par rapport à l'autre. Cette rupture appelée "délaminage" s'amorce au point d'impact et se propage ensuite entre les différentes nappes de tissus concernées. Le problème est que le délaminage est favorisé par la nécessaire rigidité de l'aube qui empêche l'absorption des chocs des impacts.

On connaît des tissus comportant plusieurs couches liées entre elles directement au tissage par des fils supplémentaires les traversant et tissés avec des fils de trame et de chaîne de chaque couche. Ces tissus sont appelés de ce fait 3D, D signifiant dimension. Les fils supplémentaires apportent à l'intérieur du tissu une grande résistance au délaminage, mais ils alourdissent ce même tissu.

On connaît aussi par le brevet FR 2 610 951 un tissu multicouche dont les fils de chaîne traversent chacun plusieurs couches, ce tissu permettant de réaliser des structures minces, notamment pour des éléments de protection thermique d'engins spatiaux. Ces tissus offrent à masse égale une meilleure résistance que les tissus 3D ci-dessus, mais ils ne résolvent pas le problème du délaminage entre les nappes de tissus assemblées ensuite en couches successives pour constituer l'aube.

En outre, il est connu du document FR2732406 d'utiliser un insert pour rigidifier une aube réalisée en tissus 3D. Cependant ces inserts sont bien adaptés pour certaines applications. Cependant, des améliorations sont recherchées, en particulier pour adapter l'aube à une application dans un étage statorique à calage variable. Dans ce type d'application les contraintes sont spécifiques, en particulier pour le raccordement de l'aube à fixation dans la turbomachine, par exemple pour offrir une rigidité suffisante pour une aube d'un étage statorique tout en permettant d'assurer des modifications de calage dans le cas d'un étage statorique à calage variable.

Le document EP-3 406 424 divulgue une aube conforme au préambule de la revendication 1.

Il est également connu du document FR-2 732 406 d'augmenter la rigidité d'une aube en utilisant un insert qui écarte deux nappes pendant le moulage afin de former une surépaisseur au pied de l'aube.

En conséquence, il serait souhaitable de disposer d'une aube présentant une rigidité suffisante pour être attachée à un étage statorique à calage variable et permettant d'assurer des modifications de calage.

Dans la présente description, un étage correspond à une roue aubagée pouvant être aussi qualifiée d'aubage.

### EXPOSE DE L'INVENTION

Selon un premier aspect, on prévoit selon l'invention une aube conforme à la revendication 1.

Ainsi, d'une manière particulièrement avantageuse, les deux inserts connectés l'un à l'autre permettent à l'aube de présenter une rigidité suffisante pour être attachée à un étage statorique à calage variable et permettent d'assurer des modifications de calage.

Le premier insert, dit insert radial peut s'étendre selon une direction radiale de l'aube.

Le deuxième insert, dit insert axial, peut s'étendre selon une direction axiale de l'aube.

Les inserts peuvent être assemblés l'un à l'autre pour former une croix.

L'insert radial peut présenter un trou débouchant adapté pour être traversé par l'insert axial.

Le renfort fibreux peut présenter une déliaison axiale située entre 20% et 60% d'une hauteur de l'aube à partir d'un piétement de l'aube, et débouchant sur un bord d'attaque ou un bord de fuite de l'aube.

Selon un autre aspect, l'invention propose un procédé de fabrication d'une aube de soufflante selon l'invention, comprenant les étapes de :
- fourniture du renfort fibreux,
- positionnement et assemblage des inserts dans le renfort fibreux,
- injection de résine sur le renfort fibreux.

Le positionnement des inserts peut être réalisé par les déliaisons.

Selon un autre aspect, l'invention propose une turbomachine comprenant une aube selon l'invention.

La turbomachine peut comprendre un étage rotorique amont et un étage statorique à calage variable aval, par rapport à un sens d'écoulement des gaz, l'étage statorique à calage variable pouvant comprendre au moins une aube.

Selon un autre aspect l'invention propose un aéronef comprenant au moins une turbomachine selon invention.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une représentation schématique en coupe d'une aube selon l'invention.
La figure 2 est une représentation schématique de l'assemblage de deux inserts selon l'invention dans un plan axial.
La figure 3 est une représentation schématique de l'assemblage de deux inserts selon l'invention dans un plan radial.
La figure 4 est une représentation schématique d'une déliaison dans un plan axial.

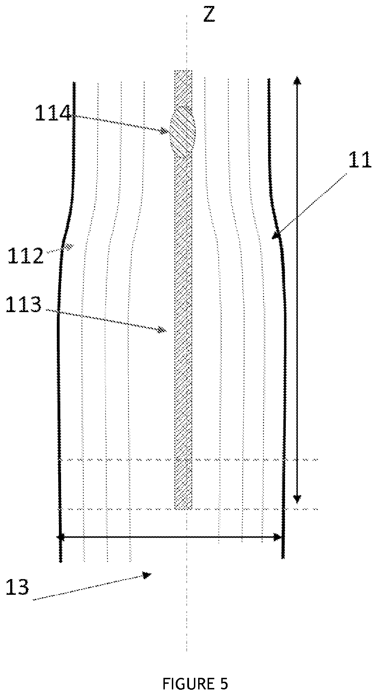

La figure 5 est une représentation schématique d'une déliaison dans un plan radial.
La figure 6 est une représentation schématique d'une étape d'injection de résine sur un renfort fibreux selon l'invention.
La figure 7 est une représentation schématique d'une turbomachine selon l'invention.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la turbomachine 10, en particulier dans un étage statorique à calage variable 100 comprenant une aube 1. Par ailleurs, on appelle axe de révolution de l'étage statorique à calage variable 100, l'axe X de symétrie radiale de l'étage statorique à calage variable 100, cet axe X correspondant à l'axe de révolution global de la turbomachine, en particulier l'axe de rotation de ses rotors. Selon le mode de réalisation ici présenté, l'aube 1 est fixé à un étage statorique à calage variable 100. Néanmoins, selon d'autres modes de réalisations, l'aube 1 pourrait être fixée à n'importe quel type de soufflante sans que cela n'induise d'importantes modifications structurelles.

La direction axiale X' correspond à une direction située dans un plan sensiblement parallèle à la direction de l'axe X de l'étage statorique à calage variable 100 et reliant un bord d'attaque et un bord de fuite de l'aube 1, et une direction radiale Z est une direction perpendiculaire à cet axe X et passant par lui. Ces deux directions sont définies dans un repère orthogonal intégrant aussi une direction azimutale (non représentée). Par commodité, dans la présente description, on prendra le cas dans lequel le vecteur X' est orienté dans le sens de la turbomachine. Néanmoins, on comprend bien que l'étage statorique 100 de la turbomachine 10 présentée étant à calage variable, l'orientation du vecteur X' peut varier en fonction de l'orientation des aubes de cet étage mais pour faciliter les explications dans la description, la direction du vecteur est considérée en restant dans un plan sensiblement parallèle à l'axe X. De même, un vecteur Z correspondant à la direction Z est orienté du centre de la turbomachine vers l'extérieur.

Un étage statorique à calage variable 100 comprend un disque portant une pluralité d'aubes 1 associées à un dispositif de fixation 101 associé à un système de calage variable 102. Ici, la notion de disque correspond en définition générale à tout dispositif de fixation de l'aube dans la turbomachine, dans un tronçon général de piétement d'aube.

### Aube

Chaque aube 1 comprend une structure en matériau composite comportant un renfort fibreux 11 obtenu par tissage tridimensionnel et une matrice dans laquelle est noyé le renfort fibreux 11.

Cette structure en matériau composite forme une pale 12 à profil aérodynamique.

La pale 12 présente, de manière connue en soi, un piétement 13, un sommet 16, un bord d'attaque 14 et un bord de fuite 15, une paroi intrados et une paroi extrados. Le piétement 13 correspond ici à un tronçon d'extrémité radialement intérieure de la pale à l'opposé de son sommet qui est son extrémité radialement extérieure.

Le bord d'attaque 14 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 15 quant à lui correspond à la partie postérieure du profil aérodynamique, où se rejoignent les écoulements intrados et extrados.

Enfin, la structure est formée d'une pluralité de sections d'aube 1 empilées depuis le piétement 13 selon un axe d'empilement correspondant à la direction radiale Z s'étendant radialement par rapport à l'axe de révolution X de la soufflante.

Dans ce qui suit, par « hauteur » on désignera une distance suivant la direction radiale Z.

Ainsi, la pale 12 présente une hauteur h correspondant à la distance suivant la direction radiale Z entre son piétement 13 et son sommet 16.

### Renfort fibreux

Le renfort fibreux 11 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube 1 est alors formée par moulage au moyen d'un procédé d'injection sous vide de résine du type RTM (pour « Resin Transfer Moulding), ou encore VARRTM (pour Vacuum Resin Transfer Molding).

Dans l'exemple ici présenté, les torons de trame 111 s'entendent selon la direction axiale X' et les torons de chaine 112 s'étendent selon la direction radiale Z.

Le renfort fibreux 11 présente une déliaison 113 et, selon une disposition technique particulière, aussi une déliaison 114.

Le renfort fibreux 11 présente une déliaison radiale 113 à partir du piétement 13 de l'aube 1 et jusqu'à environ 60% de la hauteur h de l'aube 1, et entre 20% et 30% d'une corde en piètement de la pale de l'aube 1 allant du bord d'attaque 14 de la pale vers le bord de fuite 15. La déliaison radiale 113 signifie que l'on ne relie plus les torons de chaine 112 sur toute l'épaisseur du renfort fibreux 11 entre deux colonnes de torons de chaine 112 fixés.

En sus, le renfort fibreux 11 présente une déliaison axiale 114 située entre 20% et 60% de la hauteur de l'aube 1 à partir du piétement 13 de la pale de l'aube 1, et débouchant sur la totalité d'une corde de l'aube 1 allant du bord d'attaque 14 vers le bord de fuite 15. La déliaison axiale 114 signifie que l'on ne relie plus les torons de chaine 112 sur toute l'épaisseur du renfort fibreux 11 entre deux colonnes de torons de trame 111 fixés.

Les déliaisons 113 et 114 sont des dispositions techniques particulièrement avantageuses de l'invention, dont la fonction sera détaillée ci-après.

### Inserts

L'aube 1 comprend deux inserts 20, 21 de rigidification. Un premier insert 20 s'étend selon une première direction et un deuxième insert 21 s'étend selon une deuxième direction, non colinéaire de la première.

En d'autres termes, les deux inserts 20 et 21 sont orientés selon deux directions sécantes.

Tel que cela sera détaillé ci-après, cette disposition permet de rigidifier l'aube 1 en permettant notamment que les inserts 20 et 21 se bloquent mutuellement en rotation. Tel que cela sera détaillé ci-après, les inserts sont noyés dans la structure en matériau composite. Ainsi, un couple transmis sur un insert est répercuté sur l'autre insert et transmis à l'ensemble de la structure en matériau composite. L'orientation des deux inserts augmente le moment résultant du couple transmis à un insert. Ainsi, dans le cas où le couple transmis a pour but de faire pivoter l'aube 1, la disposition des deux inserts 20 et 21 permet de modifier efficacement l'orientation de l'aube 1. De même dans le cas contraire où l'aube 1 doit résister au couple transmis, la disposition des inserts 20 et 21 permet d'avoir un important couple résistif permettant de conserver l'aube 1 dans la position voulue.

Selon le mode de réalisation ici présenté, le premier insert, dit insert radial 20 s'étend selon la direction radiale Z, et le deuxième insert, dit insert axial 21 s'étend selon la direction axiale X'.

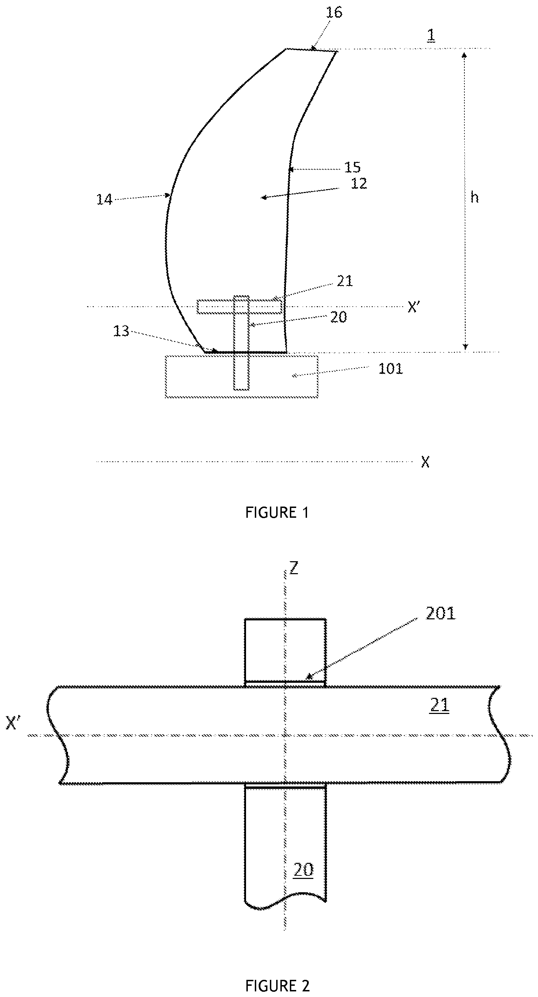

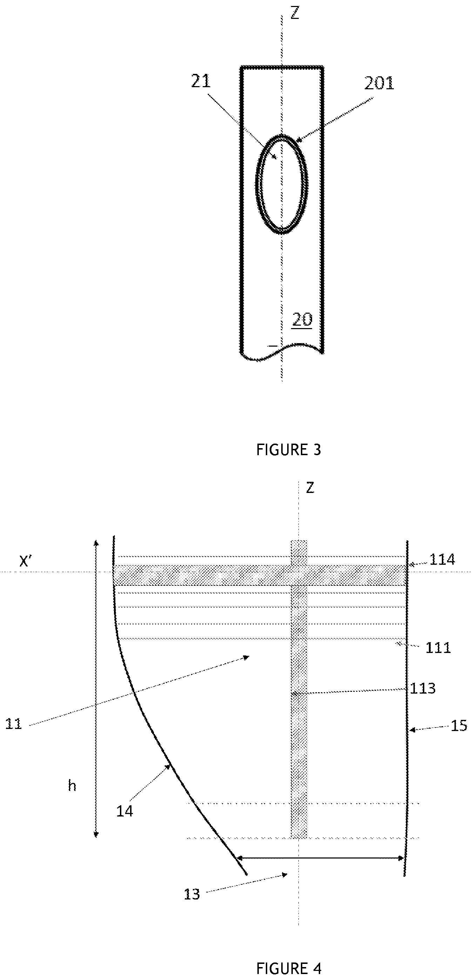

Tel que représenté sur les figures 2 et 3, les deux inserts 20 et 21 peuvent chacun présenter la forme d'une tige de section sensiblement elliptique. En sus, les inserts 20 et 21 sont préférentiellement assemblés en croix. Selon cette disposition, l'insert radial 20 présente un trou 201 débouchant axial adapté pour être traversé par l'insert axial 21.

Selon le mode de réalisation ici présenté, les inserts sont encastrés l'uns dans l'autre.

D'une manière particulièrement avantageuse, la section elliptique des inserts 20 et 21 permet aux inserts 20, 21 d'être facilement bloqués en rotation en les disposant dans un trou ou une empreint elliptique complémentaire. Tel que cela sera décrit ci-après cette disposition permet de transmettre aisément un couple à l'insert radial 20.

Tel que représenté sur les figures, l'insert radial 20 débouche du piétement 13 de la pale. Cette disposition permet d'utiliser l'insert radial 20 pour assembler l'aube 1 à un système de calage variable 101. Le système de calage variable 101 est adapté pour transférer un couple à l'insert radial 20 pour faire pivoter l'aube 1 autour de la direction radiale Z.

On comprend aisément que la structure en croix des deux inserts 20 et 21 permet de rigidifier l'aube 1 et notamment d'augmenter la rigidité aux efforts de rotation autour de la direction radiale Z.

Typiquement, les inserts 20 et 21 sont des tiges métalliques.

### Procédé de fabrication

Selon un autre aspect, l'invention concerne un procédé de fabrication d'une aube 1.

Le procédé de fabrication comprend principalement les étapes de :
- fourniture du renfort fibreux 11,
- positionnement et assemblage des inserts 20, 21 dans le renfort fibreux 11,
- injection de résine sur le renfort fibreux 11, à savoir en imprégnant le renfort fibreux et en enveloppant le renfort fibreux.

Plus précisément, la fourniture du renfort fibreux 11 comprend une étape de tissage des torons de trame 111 et de chaine 112 du renfort fibreux 11. Préférentiellement, le renfort fibreux 11 est tissé selon une direction allant du piétement 13 au sommet 16.

Le positionnement et l'assemblage des inserts 20, 21 dans le renfort fibreux 11 se fait grâce aux déliaisons 113 et 114. Préférentiellement, l'insert radial 20 est inséré par le piétement 13. L'insert axial 21 est ensuite inséré par le bord d'attaque14 ou le bord de fuite 15 et traverse le trou 201 de l'insert radial 20.

On peut ensuite procéder à une co-injection à l'aide du procédé RTM. Il est remarquable que les inserts 20 et 21 sont présents dans la préforme au moment de l'injection. Cette disposition permet que les inserts 20 et 21 soient noyés dans la résine et fasse ainsi parti intégrante du composite.

Il est précisé que dans le cas où les inserts sont en métal, les caractéristiques du métal choisi leur permettent de résister à la température élevée du moule lors de l'injection.

Selon une disposition avantageuse, le moule d'injection doit prendre en compte un espacement spécifique pour l'insert radial 20 qui dépassera de la pale 12 afin d'éviter toute présence de résine autour de celui-ci.

Il est possible de prévoir un ébavurage à l'issu de l'étape d'injection.

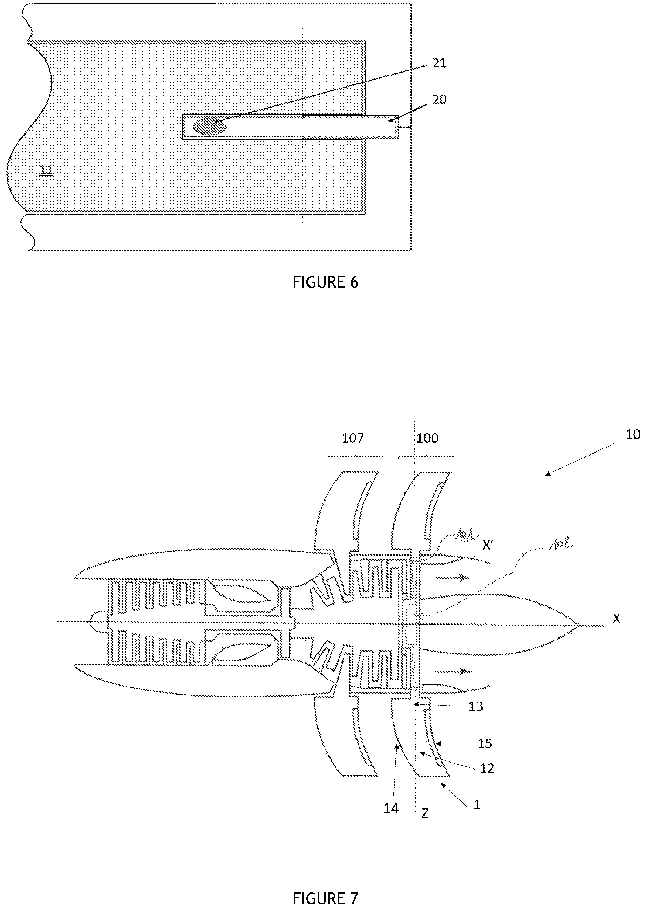

Lors de l'injection, plusieurs solutions sont envisageables afin de simplifier les opérations d'usinage / traitement de surface par la suite :
- La première solution est d'usiner un sur-longueur brute de la pale 12 et de l'insert radial 20 en même temps. Dans ce cas, il faudra potentiellement prévoir une surépaisseur sur l'insert radial 20 qui sera usinée et permettra d'avoir un état de surface propre de celui-ci.
- Une deuxième solution est de couvrir la partie de l'insert radial 20 située dans le brut lors de l'injection. Dans ce cas, la surface de l'insert radial située dans le brut doit avoir un état de surface propre lors de son assemblage car elle ne sera pas retravaillée post injection. Cette pièce pourrait être fixé sur le moule ou simplement être un ajout à venir emmancher sur l'insert radial 20 (voir figure 6).

Selon un autre aspect, l'invention concerne une turbomachine, telle que représentée sur la figure 7, comprenant une soufflante comprenant un étage rotorique amont et un étage statorique à calage variable aval, par rapport à un sens d'écoulement des gaz, l'étage statorique à calage variable comprenant au moins une aube 1 selon l'invention.

Selon un dernier aspect, l'invention concerne un aéronef comprenant au moins une turbomachine comprenant une ou plusieurs aubes selon l'invention.

## Revendications

1. Aube (1) pour soufflante de turbomachine,
l'aube comprenant :
- une structure en matériau composite comprenant un renfort fibreux (11) obtenu par tissage tridimensionnel de torons (111, 112) et une matrice dans laquelle est noyé le renfort fibreux (11),
- un premier insert (20) de rigidification s'étendant selon une première direction dans la structure, et
- au moins un deuxième insert (21) connecté au premier selon une deuxième direction non colinéaire de la première direction et s'étendant dans la structure,
le premier insert (20) débouchant de l'aube (1) pour être connecté à un disque d'un élément de turbomachine,
**caractérisée en ce que** le renfort fibreux (11) présente une déliaison radiale (113) à partir d'un piétement (13) de l'aube (1) et jusqu'à environ 60% d'une hauteur (h) de l'aube (1), et entre 20% et 30% d'une corde en pied de pale de l'aube (1), le premier insert (20) étant positionné dans le renfort fibreux par la déliaison radiale (113).

2. Aube (1) de soufflante selon la revendication 1 dans laquelle le premier insert, dit insert radial (20), s'étend selon une direction radiale (Z) de l'aube (1).

3. Aube (1) de soufflante selon l'une quelconque des revendications 1 ou 2, dans laquelle le deuxième insert, dit insert axial (21), s'étend selon une direction axiale (X') de l'aube (1).

4. Aube (1) de soufflante selon les revendications 2 et 3 en combinaison, dans laquelle les inserts (20, 21) sont assemblés l'un à l'autre pour former une croix.

5. Aube (1) de soufflante selon la revendication 4, dans laquelle l'insert radial (20) présente un trou (201) débouchant adapté pour être traversé par l'insert axial (21).

6. Aube (1) de soufflante selon l'une quelconque des revendications 1 à 5, dans laquelle le renfort fibreux (11) présente une déliaison axiale (114) située entre 20% et 60% d'une hauteur (h) de l'aube (1) à partir d'un piétement (13) de l'aube (1), et débouchant sur un bord d'attaque (14) ou un bord de fuite (15) de l'aube (1), le deuxième insert (21) étant positionné dans le renfort fibreux par la déliaison axiale (114).

7. Procédé de fabrication d'une aube (1) de soufflante selon l'une quelconque des revendications 1 à 6, comprenant les étapes de :
- fourniture du renfort fibreux (11),
- positionnement et assemblage des inserts (20, 21) dans le renfort fibreux (11),
- injection de résine sur le renfort fibreux (11).

8. Procédé selon la revendication 7 en combinaison avec la revendication 6, dans lequel le positionnement des inserts (20,21) est réalisé par les déliaisons (113,114).

9. Turbomachine (10) comprenant une aube (1) selon l'une quelconque des revendications 1 à 6.

10. Turbomachine (10) selon la revendication 9 comprenant un étage rotorique amont et un étage statorique à calage variable (100) aval, par rapport à un sens d'écoulement des gaz, l'étage statorique à calage variable (100) comprenant au moins une aube (1).

11. Aéronef comprenant au moins une turbomachine (10) selon l'une des revendications 9 ou 10.

## Patentansprüche

1. Schaufel (1) für Gebläse einer Turbomaschine,
wobei die Schaufel umfasst:
- eine Struktur aus Verbundwerkstoff, die eine Faserverstärkung (11) umfasst, die durch dreidimensionales Weben von Litzen (111, 112) erhalten wird, und eine Matrix, in die die Faserverstärkung (11) eingebettet ist,
- einen ersten Versteifungseinsatz (20), der sich in einer ersten Richtung in der Struktur erstreckt, und
- mindestens einen zweiten Einsatz (21), der mit dem ersten in einer zweiten Richtung verbunden ist, die nicht kolinear zur ersten Richtung ist und sich in der Struktur erstreckt,
wobei der erste Einsatz (20) aus der Schaufel (1) für eine Verbindung mit einer Scheibe eines Turbomaschinenelements ausmündet,
**dadurch gekennzeichnet, dass** die Faserverstärkung (11) eine radiale Trennung (113) ab einem Fuß (13) der Schaufel (1) bis zu etwa 60% einer Höhe (h) der Schaufel (1) und zwischen 20% und 30% einer Sehne am Fuß des Blatts der Schaufel (1) aufweist, wobei der erste Einsatz (20) in der Faserverstärkung durch die radiale Trennung (113) positioniert ist.

2. Gebläseschaufel (1) nach Anspruch 1, wobei sich der erste Einsatz, bezeichnet als radialer Einsatz (20), in einer radialen Richtung (Z) der Schaufel (1) erstreckt.

3. Gebläseschaufel (1) nach einem der Ansprüche 1 oder 2, wobei sich der zweite Einsatz, bezeichnet als axialer Einsatz (21), in einer axialen Richtung (X') der Schaufel (1) erstreckt.

4. Gebläseschaufel (1) nach den Ansprüchen 2 und 3 in Kombination, wobei die Einsätze (20, 21) miteinander zu einem Kreuz verbunden sind.

5. Gebläseschaufel (1) nach Anspruch 4, wobei der radiale Einsatz (20) ein durchgehendes Loch (201) aufweist, das zum Hindurchführen des axialen Einsatzes (21) geeignet ist.

6. Gebläseschaufel (1) nach einem der Ansprüche 1 bis 5, wobei die Faserverstärkung (11) eine axiale Trennung (114) aufweist, die sich zwischen 20% und 60% einer Höhe (h) der Schaufel (1) ab einem Fuß (13) der Schaufel (1) befindet und an einer Vorderkante (14) oder einer Hinterkante (15) der Schaufel (1) ausmündet, wobei der zweite Einsatz (21) in der Faserverstärkung durch die axiale Trennung (114) positioniert ist.

7. Verfahren zur Herstellung einer Gebläseschaufel (1) nach einem der Ansprüche 1 bis 6, umfassend die folgenden Schritte:
- Bereitstellen der Faserverstärkung (11),
- Positionieren und Verbinden der Einsätze (20, 21) in der Faserverstärkung (11),
- Einspritzen von Harz in die Faserverstärkung (11).

8. Verfahren nach Anspruch 7 in Kombination mit Anspruch 6, wobei das Positionieren der Einsätze (20, 21) durch die Trennungen (113, 114) erfolgt.

9. Turbomaschine (10), umfassend eine Schaufel (1) nach einem der Ansprüche 1 bis 6.

10. Turbomaschine (10) nach Anspruch 9, umfassend eine stromaufwärtige Rotorstufe und eine stromabwärtige Statorstufe (100) mit veränderbarer Einstellung in Bezug auf eine Strömungsrichtung der Gase, wobei die Statorstufe (100) mit veränderbarer Einstellung mindestens eine Schaufel (1) umfasst.

11. Flugzeug, umfassend mindestens eine Turbomaschine (10) nach einem der Ansprüche 9 oder 10.

## Claims

1. Fan blade (1) of a turbomachine,
the fan blade comprising :
- a composite material structure comprising a fibrous reinforcement (11) obtained by three-dimensional weaving of strands (111, 112) and a matrix in which the fibrous reinforcement (11) is embedded,
- a first stiffening insert (20) extending in a first direction in the structure, and
- at least one second insert (21) connected to the first in a second direction not collinear with the first direction and extending into the structure,
the first insert (20) emerging from the blade (1) to be connected to a disc of a turbomachine element,
**characterised in that** the fibrous reinforcement (11) has a radial unbinding (113) starting from a base (13) of the blade (1) and up to approximately 60% of a height (h) of the blade (1), and between 20% and 30% of a chord at the foot of the blade of the blade (1), the first insert (20) being positioned in the fibrous reinforcement by the radial unbinding (113).

2. Fan blade (1) according to claim 1, in which the first insert, known as the radial insert (20), extends in a radial direction (Z) of the blade (1).

3. Fan blade (1) according to any one of claims 1 or 2, in which the second insert, known as the axial insert (21), extends in an axial direction (X') of the blade (1).

4. Fan blade (1) according to claims 2 and 3 in combination, in which the inserts (20, 21) are joined together to form a cross.

5. Fan blade (1) according to claim 4, in which the radial insert (20) has a through hole (201) adapted to be passed through by the axial insert (21).

6. Fan blade (1) according to any one of claims 1 to 5, in which the fibrous reinforcement (11) has an axial unbinding (114) located between 20% and 60% of a height (h) of the blade (1) from a base (13) of the blade (1), and opening onto a leading edge (14) or a trailing edge (15) of the blade (1), the second insert (21) being positioned in the fibrous reinforcement by the axial unbinding (114).

7. A method of manufacturing a fan blade (1) according to any one of claims 1 to 6, comprising the steps of:
- providing the fibrous reinforcement (11),
- positioning and assembling the inserts (20, 21) in the fibrous reinforcement (11),
- injection of resin on the fibrous reinforcement (11).

8. Method according to claim 7 in combination with claim 6, in which the positioning of the inserts (20, 21) is achieved by unbinding (113, 114).

9. Turbomachine (10) comprising a blade (1) according to any one of claims 1 to 6.

10. A turbomachine (10) as claimed in claim 9, comprising an upstream rotor stage and a downstream variable-pitch stator stage (100) relative to a gas flow direction, the variable-timing stator stage (100) comprising at least one blade (1).

11. Aircraft comprising at least one turbomachine (10) according to one of claims 9 or 10.
